# EUROPEAN PATENT APPLICATION

(11) **EP 4 746 073 A1**
(43) Date of publication of application: **20.05.2026**
(21) Application number: 24839799.4
(22) Date of filing: 10.07.2024
(51) Int. Cl.: H01M 4/525, C01G 53/00, H01M 4/505

(54) **POSITIVE ELECTRODE ACTIVE MATERIAL FOR LITHIUM ION SECONDARY BATTERIES**

(30) Priority: 13.07.2023 JP 2023115020
(71) Applicant: SUMITOMO METAL MINING CO., LTD., Tokyo 105-8716 (JP)
(72) Inventor: SENDAN, Yuki, Niihama-shi, Ehime 792-0002 (JP); KANEDA, Haruki, Niihama-shi, Ehime 792-0002 (JP); KAWAZOE, Takuya, Niihama-shi, Ehime 792-0002 (JP)
(74) Representative: Watermeyer, Nicholas
(86) International application number: PCT/JP2024/025004
(87) International publication number: WO 2025/013909

(57) **Abstract**

A positive electrode active material for lithium-ion secondary batteries includes a lithium metal complex oxide having an α-NaFeO₂ crystal structure. The positive electrode active material includes secondary particles, and each secondary particle includes primary particles aggregated to one another. The positive electrode active material is represented by a general formula: LiₐNi₁₋ₓFeₓM_{y}O_{2+α} (a, x, y, and α are numbers satisfying 0.95 ≤ a ≤ 1.5, 0.01 ≤ x ≤ 0.2, 0 ≤ y < 0.1, and -0.1 ≤ α ≤ 0.2, respectively, and M includes at least one element selected from the group consisting of W, Mo, V, Ti, Sn, Mn, Nb, Zr, Ta, B, and Si). An excess lithium content of the positive electrode active material is 0.1 percent by mass or greater and 1 percent by mass or less.

## Description

### TECHNICAL FIELD

The present invention relates to a positive electrode active material for lithium-ion secondary batteries.

### BACKGROUND OF THE INVENTION

Lithium-ion secondary batteries are widely used as batteries that serve as power sources for electronic devices, such as smartphones, mobile PCs, and the like, and for electric tools, electric vehicles, and the like that require a high output and high capacity. In the coming future, the lithium-ion secondary batteries are expected to be mounted on next-generation robots, drones, or the like, and are also expected to serve as key devices for constructing smart grids and smart communities. Thus, development and improvements have been currently attempted to further enhance performance and reducing costs of lithium-ion secondary batteries.

As a positive electrode active material used for a lithium-ion secondary battery, a positive electrode active material formed of a lithium nickel manganese cobalt complex oxide (also referred to as "NMC" hereinafter) that includes nickel, manganese, and cobalt at a specific ratio has been known. As the positive electrode active material used for the lithium-ion secondary battery, moreover, a positive electrode active material formed of a lithium nickel cobalt aluminum complex oxide (also referred to as "NCA" hereinafter) that includes nickel, cobalt, and aluminum at a specific ratio has also been known. The above positive electrode active materials have drawn attention particularly as materials that have excellent thermal stability and high capacities, achieve favorable cycle performance, and can achieve high output with a low resistance. Among such positive electrode active materials, examples of the positive electrode active materials that have been widely used include NMC111, NMC532, NMC622, and NMC811 disclosed in Patent Documents 1 to 3, and the like. The number provided after NMC indicates a content ratio between elements with a ratio based on the amount of substance of each of the elements, and NMC111 indicates that nickel, manganese, and cobalt are included at a ratio of 1:1:1.

On the other hand, these lithium metal complex oxides, such as NMC, NCA, and the like, include a large amount of cobalt that is particularly expensive among rare metals, and the inclusion of cobalt is a major factor in the increase of costs of lithium-ion secondary batteries. In addition, from the viewpoint of the resource availability, it is presumed to be extremely difficult to meet the expanding demand for lithium-ion secondary batteries in the future, if production of a lithium metal complex oxide including a large amount of scarce cobalt continues as it is, considering the current situation in which approximately 20% of cobalt resources is used in the battery field.

Accordingly, the development of a lithium metal complex oxide that has a reduced cobalt content and achieves a further reduction in costs while maintaining excellent battery characteristics is an important key to further development of lithium-ion secondary batteries in the future.

For example, Patent Document 4 discloses a lithium secondary battery, which includes a negative electrode formed of a material capable of occluding and releasing a lithium metal or lithium, and a positive electrode formed of a lithium-containing metal oxide capable of occluding and releasing lithium. The lithium-containing metal oxide is represented by the composition formula: LiₓMn_{1-y-z}Ni_{y}Fe_{z}O₂, with the proviso that 1 ≤ x ≤ 1.3, 0.05 ≤ y < 0.9, 0.05 ≤ z < 0.9, and 0.1 ≤ y+z ≤ 0.9. Patent Document 4 describes that there can be provided a lithium secondary battery that has excellent stability of a crystal structure, and achieves excellent battery characteristics, such as cycle life, storage stability, and the like, while using manganese that is an inexpensive and resource-rich material in a positive electrode active material.

Patent Document 5 discloses a lithium ferrite-based complex oxide represented by the composition formula: Li₁₊ₓ(Ti_{1-y-z}Fe_{y}Ni_{z})₁₋ₓO₂ (provided that, 0 ≤ x ≤ 0.33, 0 < y ≤ 0.95, 0 < z ≤ 0.5, and 0 < y+z < 1) and has a cubic rock salt structure. Patent Document 5 describes that a novel lithium ferrite-based complex oxide material capable of stably charging and discharging in an operation voltage region (approximately 4 V), which is comparable to the existing lithium cobalt oxide-based positive electrode materials, can be obtained using an inexpensive raw material.

Patent Document 6 discloses a method for producing a lithium ferrite-based complex oxide represented by the composition formula: Li₁₊ₓ(Mn₁₋ₘ₋ₙFeₙNiₘ)₁₋ₓO₂ (provided that, 0 < x < 1/3, 0.01 ≤ m ≤ 0.50, 0.05 ≤ n ≤ 0.75, and 0.06 ≤ m+n < 1). The method includes transforming a mixed aqueous solution including a manganese compound, an iron compound, and a nickel compound to alkaline at a liquid temperature of 0°C or lower to precipitate, and firing the generated precipitate together with a lithium compound. Patent Document 6 describes that the lithium ferrite-based complex oxide represented by the predetermined composition formula can be obtained by a simple production method without a complicated procedure, such as hydrothermal synthesis.

Patent Document 7 discloses a lithium complex metal oxide represented by the formula (A): Liₓ(Mn_{1-y-z}Ni_{y}Fe_{z})O₂ (in the formula, x is a value in the range of 0.9 or greater and 1.3 or less, y is a value in the range of 0.46 or greater and less than 0.5, and z is a value in the range of 0 or greater and less than 0.1). Patent Document 7 describes that there can be provided a nonaqueous electrolyte secondary battery achieving more excellent cycle performance, particularly cycle performance at a high temperature operation, such as 60°C, compared to the existing lithium secondary batteries.

Patent Document 8 discloses a lithium complex metal oxide represented by the formula (A): Liₓ(Mn_{1-(y+z)}Ni_{y}Fe_{z})O₂ (in the formula, x is 0.9 or greater and 1.3 or less, y is greater than 0.5 and 0.7 or less, and z is greater than 0 and 0.1 or less). Patent Document 8 describes that there can be provided a nonaqueous electrolyte secondary battery having a higher discharge capacity compared with existing lithium secondary batteries.

Patent Document 9 discloses a positive electrode material for nonaqueous electrolyte secondary batteries, in which an entire surface of the positive electrode active material is covered with a polymer that is soluble in a nonaqueous solvent. Patent Document 9 describes that, since the direct contact between the positive electrode active material and a nonaqueous electrolyte can be inhibited by the polymer that covers the entire surface of the positive electrode active material and is soluble in a nonaqueous solvent, thereby suppressing an excessive chemical reaction between the positive electrode active material (particularly active sites) and the electrolyte, thermal stability of a positive electrode plate can be improved during charging even when the positive electrode active material having a high nickel content is used for the positive electrode plate.

Patent Document 10 discloses a lithium manganese-based complex oxide that is a complex oxide having a monoclinic layered rock salt structure, which is represented by the composition formula: Li₁₊ₓ(Mn₁₋ₘ₋ₙFeₘNiₙ)₁₋ₓO₂ (in the formula, the ranges of x, m, and n are 0 ≤ x ≤ 1/3, 0 ≤ m ≤ 0.6, 0 ≤ n ≤ 0.3, respectively), where (1) the molar ratio of the three components, Mn, Fe, and Ni, is within the range of a square having, as apexes, 4 points, a point A (Mn:Fe:Ni = 60:40:0), a point B (Mn:Fe:Ni = 40:60:0), a point C (Mn:Fe:Ni = 70:0:30), and a point D (Mn:Fe:Ni = 80:0:20) in the molar ratio triangle composition diagram having Mn, Fe, and Ni as apexes, an (2) the average oxidation number of Mn, Fe, and Ni is 3.4 to 3.6. Patent Document 10 describes that there can be provided a novel complex oxide that is a lithium manganese-based complex oxide including iron and nickel, in which the average oxidation number of the transition metal elements of manganese, iron, and nickel is adjusted to the range of 3.4 to 3.6.

Patent Document 11 discloses a polycrystalline Co-Ni-Mn ternary positive electrode material. Patent Document 11 describes that the disclosed material achieves excellent electrochemical performance, a higher volume energy density, and high safety with low material costs.

Patent Document 12 discloses a positive electrode active material for nonaqueous electrolyte secondary batteries, which is formed of a lithium metal complex oxide powder represented by LiₓNi_{1-y-z}Co_{y}M_{z}O₂ (provided that, 0.96 ≤ x ≤ 1.03, 0.05 < y ≤ 0.20, 0 < z ≤ 0.10, and M is at least one metal element selected from the group consisting of V, Cr, Fe, and Mn). Patent Document 12 describes that there can be provided a nonaqueous electrolyte secondary battery, which has a high capacity and excellent cycle performance, enables easy production of an electrode plate without causing gelation during the preparation of the paste at the time of production of the battery electrode plate, satisfies current demands for a high capacity corresponding to small secondary batteries of mobile electronic devices or the like, and can secure cycle performance desired for a power source used in a large-size secondary battery for hybrid vehicles, electric vehicles, or stationary storage battery.

Patent Document 13 discloses a lithium manganese-based complex oxide, which includes a lithium iron manganese-based complex oxide represented by the composition formula: Li_{1+x-w}(Fe_{y}Ni_{z}Mn_{1-y-z})₁₋ₓO_{2-δ} (0 < x < 1/3, 0 ≤ w < 0.8, 0 < y < 1, 0 < z < 0.5, y+z < 1, and 0 ≤ δ < 0.5), and discloses that at least part of iron atoms is 5-valent iron in a charged state of a lithium-ion battery using the lithium manganese-based complex oxide as a positive electrode active material. Patent Document 13 describes that there can be provided a lithium manganese-based complex oxide that can achieve a high capacity, and a positive electrode and a lithium-ion secondary battery using the lithium manganese-based complex oxide.

### RELATED-ART DOCUMENT

### Patent Document

Patent Document 1: Japanese Unexamined Patent Application Publication No. 2010-192424
Patent Document 2: Japanese Unexamined Patent Application Publication No. 2015-018803
Patent Document 3: Japanese Unexamined Patent Application Publication No. 2022-063416
Patent Document 4: Japanese Unexamined Patent Application Publication No. 2000-195516
Patent Document 5: Japanese Unexamined Patent Application Publication No. 2003-306332
Patent Document 6: Japanese Unexamined Patent Application Publication No. 2006-036621
Patent Document 7: Japanese Unexamined Patent Application Publication No. 2010-222234
Patent Document 8: Japanese Unexamined Patent Application Publication No. 2011-093783
Patent Document 9: Japanese Unexamined Patent Application Publication No. 2013-012410
Patent Document 10: Japanese Unexamined Patent Application Publication No. 2013-212959
Patent Document 11: Japanese Unexamined Patent Application Publication No. 2013-501317
Patent Document 12: Japanese Unexamined Patent Application Publication No. 2015-056368
Patent Document 13: International Publication No. WO 2018/143273

### SUMMARY OF THE INVENTION

### PROBLEMS TO BE SOLVED BY THE INVENTION

However, the reported positive electrode materials in which the cobalt content is reduced cannot sufficiently increase a discharge capacity when the positive electrode materials are used for lithium-ion secondary batteries, and a further improvement in performance has been desired.

Therefore, one aspect of the present invention aims to provide a positive electrode active material for lithium-ion secondary batteries, which can achieve an excellent discharge capacity when the positive electrode active material is used in a lithium-ion secondary battery, while minimizing a cobalt content of the positive electrode active material.

### MEANS FOR SOLVING THE PROBLEMS

According to one aspect of the present invention for solving the above problems, there is provided a positive electrode active material for lithium-ion secondary batteries. The positive electrode material includes a lithium metal complex oxide having an α-NaFeO₂ crystal structure. The positive electrode active material includes secondary particles, and each secondary particle includes primary particles aggregated to one another. The positive electrode active material is represented by a general formula: LiₐNi₁₋ₓFeₓM_{y}O_{2+α} (a, x, y, and α are numbers satisfying 0.95 ≤ a ≤ 1.5, 0.01 ≤ x ≤ 0.2, 0 ≤ y < 0.1, and -0.1 ≤ α ≤ 0.2, respectively, and M includes at least one element selected from the group consisting of W, Mo, V, Ti, Sn, Mn, Nb, Zr, Ta, B, and Si). An excess lithium content of the positive electrode active material is 0.1 percent by mass or greater and 1 percent by mass or less.

### EFFECTS OF THE INVENTION

According to one aspect of the present invention, there can be provided a positive electrode active material for lithium-ion secondary batteries, which can achieve an excellent discharge capacity when the positive electrode active material is used in a lithium-ion secondary battery, while minimizing a cobalt content of the positive electrode active material.

### BRIEF DESCRIPTION OF THE DRAWINGS

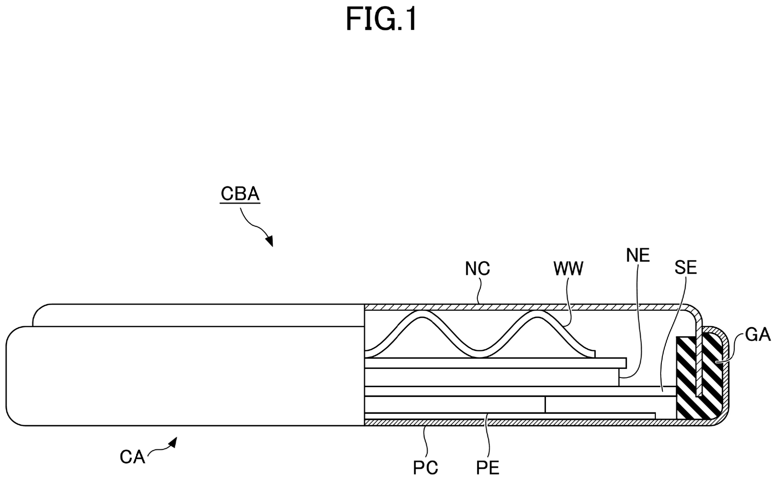

[Fig. 1] Fig. 1 is a schematic view of a coin cell battery used for battery characteristic evaluations.

### DETAILED DESCRIPTION OF THE INVENTION

Embodiments for carrying out the present invention will be described hereinafter. However, the present invention is not limited to the following embodiments, and various modifications and substitutions can be made to the following embodiments without departing from the scope of the present invention.

The positive electrode active material for lithium-ion secondary batteries according to the present invention will be described in detail hereinafter. In the following description, the description "A to B" encompasses "A or greater and B or less".

### 1. Positive electrode active material for lithium-ion secondary batteries

The positive electrode active material for lithium-ion secondary batteries (may be merely described as a "positive electrode active material" hereinafter) of the present embodiment includes secondary particles, and each secondary particle includes primary particles aggregated to one another.

The positive electrode active material of the present embodiment can be represented by a general formula: LiₐNi₁₋ₓFeₓM_{y}O_{2+α}. In the above general formula, a, x, y, and α are preferably numbers satisfying 0.95 ≤ a ≤ 1.5, 0.01 ≤ x ≤ 0.2, 0 ≤ y < 0.1, and -0.1 ≤ α ≤ 0.2, respectively. In addition, M, which is an element in the general formula, can include at least one element selected from the group consisting of W, Mo, V, Ti, Sn, Mn, Nb, Zr, Ta, B, and Si.

The positive electrode active material of the present embodiment can include a lithium metal complex oxide. The lithium metal complex oxide can have an α-NaFeO₂ crystal structure.

The excess lithium content of the positive electrode active material of the present embodiment is 0.1 percent by mass to 1 percent by mass.

### (1) Particle form and particle internal structure

The positive electrode active material of the present embodiment can include secondary particles, where each secondary particle includes primary particles aggregated to one another. The positive electrode active material of the present embodiment can be composed of secondary particles but may partially include primary particles that are not aggregated to form a secondary particle.

Shapes of the primary particles constituting each secondary particle or the primary particles existing individually are not particularly limited, and may be various shapes, such as spherical shapes, plate shapes, needle shapes, rectangular cuboid shapes, elliptical shapes, rhombohedron shapes, and the like. The aggregation configuration of the primary particles is not particularly limited. The aggregation configuration may be various configurations, such as a configuration in which the primary particles are aggregated in random directions, a configuration in which the primary particles are substantially evenly and radially aggregated from the center portion to form a substantially spherical or ellipsoidal secondary particle, or the like.

The particles of the positive electrode active material of the present embodiment, which have the above configuration of the secondary particles, have a solid structure inside each particle, and preferably include hardly any secondary particles having a hollow structure or a porous structure.

In the present specification, the solid structure refers to a structure in which the inside of each secondary particle is filled and does not include any large void, as viewed in the cross-section of each secondary particle. As described above, the particles having the solid structure with no large void inside have high strength. When the particles are used as the positive electrode active material, a bulk density of the positive electrode active material does not excessively decrease, and a sufficient contact area between the positive electrode active material and an electrolyte can be secured.

The positive electrode active material of the present embodiment includes a lithium metal complex oxide. The positive electrode active material can be composed solely of the lithium metal complex oxide, excluding inevitable impurities, such as excess lithium, and the like. Therefore, the primary particles or secondary particles of the positive electrode active material are preferably primary particles or secondary particles of the lithium metal complex oxide.

The lithium metal complex oxide can have an α-NaFeO₂ crystal structure (hexagonal layered rock salt crystal structure, space group R-3m).

### (2) Composition

The positive electrode active material of the present embodiment is preferably adjusted to have a composition represented by a general formula: LiₐNi₁₋ₓFeₓM_{y}O_{2+α}.

In the general formula, a, x, y, and α are preferably numbers satisfying 0.95 ≤ a ≤ 1.5, 0.01 ≤ x ≤ 0.2, 0 ≤ y < 0.1, and -0.1 ≤ α ≤ 0.2, respectively.

In the above general formula, 1-x, which indicates the nickel (Ni) content, is preferably 0.8 to 0.99. By setting 1-x, which is the nickel content, to 0.8 or greater, a potential and capacity of a lithium-ion secondary battery can be increased when the lithium metal complex oxide is used as the positive electrode active material. By setting 1-x, which is the nickel content, to 0.99 or less, moreover, a ratio of the amount of substance of iron (Fe) can be increased, thereby sufficiently exhibiting an effect of adding the iron.

"x", which indicates an iron (Fe) content, is preferably 0.01 to 0.2, more preferably 0.01 to 0.15, and particularly preferably 0.01 to 0.1. The material using iron, which is particularly resource-rich and inexpensive, can reduce costs, while sufficiently securing a battery capacity of a lithium-ion secondary battery, when the material using iron is used as the positive electrode active material.

By setting x, which is the iron content, to 0.01 or greater, the above cost reduction effect can be sufficiently exhibited. By setting x, which is the iron content, to 0.2 or less, an irreversible change of the crystal structure due to oxidation-reduction reaction (redox reaction) of iron during charging and discharging can be inhibited, thereby increasing a battery capacity.

Next, y indicating the M content, where M is an element optionally added, is preferably 0 or greater and less than 0.1. By adding M, an irreversible change of the crystal structure that may occur when the positive electrode active material includes iron can be particularly inhibited. In addition, by setting the M content to the above range, an excellent battery capacity can be easily maintained. Depending on a type of M, metal elements in the positive electrode active material, which contributes to an oxidation-reduction reaction, may be reduced. However, by setting y indicating the M content to less than 0.1, the reduction in the amount of the metal elements contributing to the oxidation-reduction reaction can be inhibited, and a battery capacity is increased. In addition, a cost reduction effect can be enhanced.

In the general formula, for example, M is preferably at least one selected from the group consisting of tungsten (W), molybdenum (Mo), vanadium (V), titanium (Ti), tin (Sn), manganese (Mn), niobium (Nb), zirconium (Zr), tantalum (Ta), boron (B), and silicon (Si). M is more preferably an element that can stably have a valence of +4 valent or greater, and is particularly preferably at least one selected from the group consisting of titanium and tin.

### (3) Excess lithium content

The positive electrode active material of the present embodiment can include excess lithium, and the excess lithium content (proportion) is preferably 1 percent by mass or less, more preferably 0.8 percent by mass or less, and yet more preferably 0.6 percent by mass or less.

The excess lithium refers to lithium derived from lithium hydroxide or lithium carbonate, which is inevitably included during a production process. The excess lithium content is determined by neutralization titration (simultaneous titration by the R.B. Warder's method) and is represented by a proportion with respect to the positive electrode active material.

By setting the excess lithium content to 1 percent by mass or less, excellent weather resistance can be imparted to the positive electrode active material, and a sufficient battery capacity can be maintained when the positive electrode active material is incorporated into a lithium-ion secondary battery.

The excess lithium content of the positive electrode active material of the present embodiment is preferably 0.1 percent by mass or greater, more preferably 0.11 percent by mass or greater, and yet more preferably 0.12 percent by mass or greater.

By setting the excess lithium content to 0.1 percent by mass or greater, it is possible to prevent loss of lithium required for intercalation and deintercalation in the positive electrode active material due to elution or the like. In addition, a sufficient battery capacity can be maintained when the positive electrode active material of the present embodiment is incorporated in the lithium-ion secondary battery.

### (4) Lattice constants (a-axis and c-axis)

The a-axis lattice constant of the lithium metal complex oxide included in the positive electrode active material of the present embodiment is preferably 2.87 Å or greater, more preferably 2.88 Å or greater, and yet more preferably 2.88 Å to 2.9 Å.

By setting the a-axis lattice constant of the lithium metal complex oxide to the above range, the distortion of the crystal lattice can be prevented from becoming too large, and a sufficient battery capacity can be maintained.

In addition, the c-axis lattice constant of the lithium metal complex oxide is preferably 14.2 Å or greater, more preferably 14.21 Å or greater, and particularly preferably 14.21 Å to 14.25 Å.

By setting the lattice constants of the lithium metal complex oxide to the above ranges, the distortion of the crystal lattice can be prevented from becoming too large, and a sufficient battery capacity can be maintained.

### (5) Full width at half maximum of peak of (003) plane

The full width at half maximum of the peak of the (003) plane is preferably 0.1° or less, more preferably 0.09° or less, and yet more preferably 0.08° or less in the X-ray diffraction pattern of the lithium metal complex oxide included in the positive electrode active material of the present embodiment.

The full width at half maximum of the peak of the (003) plane is preferably 0.01° or greater.

The crystallite diameter is an index that affects a size of primary particles. By controlling the crystallite diameter, an appropriate size of the primary particles can be obtained, the packing density of the secondary particles is increased, and therefore the positive electrode active material having a high particle density can be obtained. The crystallite diameter can be determined from the full width at half maximum of the peak of the (003) plane in the X-ray diffraction pattern according to the Scherrer equation or the like. The crystallite diameter and the full width at half maximum have a relationship such that the crystallite diameter increases as the full width at half maximum decreases, and the crystallite diameter decreases as the full width at half maximum increases.

Therefore, by setting the full width at half maximum to 0.1° or less, the crystallite diameter can be sufficiently increased, and the size of the primary particles can become sufficiently large. Thus, voids between the primary particles constituting each secondary particle can be minimized, thereby increasing the particle density.

### (6) D50 particle size

The D50 particle size of the particles included in the positive electrode active material of the present embodiment is preferably 3 µm to 25 µm, more preferably 4 µm to 23 µm, and particularly preferably 5 µm to 20 µm.

By setting the D50 particle size of the particles contained in the positive electrode active material of the present embodiment to the above range, a battery capacity of a lithium-ion secondary battery per volume of the positive electrode can be increased, and cycle performance of the lithium-ion secondary battery can also be improved, when the positive electrode active material is incorporated into the lithium-ion secondary battery.

Specifically, by setting the D50 particle size to 25 µm or less, a specific surface area of the positive electrode active material can be increased to increase an area of the interface between the positive electrode active material and an electrolyte of a secondary battery. Thus, resistance of the positive electrode can be minimized, thereby improving output characteristics of a resultant battery.

Further, by setting the D50 particle size to 3 µm or greater, the packing density of the particles can be increased when a positive electrode is produced, and a battery capacity per volume of the positive electrode can be increased.

The D50 particle size can be adjusted by the duration of nucleation when a metal complex hydroxide serving as a raw material of the positive electrode active material is produced by crystallization, and by an amount or pH of a raw material solution including metal components.

Specifically, for example, if the D50 particle size of the obtained particles of the positive electrode active material is greater than 25 µm, a supply amount of a raw material solution (metal compound) is increased to extend the duration of nucleation, or pH of the raw material solution may be set relatively high. By performing the above adjustment, the yield of nuclei serving as seeds of particles increases, and therefore a particle size of metal complex hydroxide to be obtained or a resultant positive electrode active material can be reduced.

If the D50 particle size of the obtained particles of the positive electrode active material is less than 3 µm, a supply amount of a raw material solution may be reduced to shorten the duration of nucleation, or pH of the raw material solution may be set relatively low. By performing the above adjustment, the yield of nuclei serving as seeds of particles decreases, and therefore a particle size of metal complex hydroxide to be obtained or a resultant positive electrode active material can be increased.

In the present specification, the D50 particle size refers to a volume-based cumulative particle size at 50% in a volume-based particle size distribution measured by a laser diffraction-scattering method.

### 2. Evaluation methods for positive electrode active material for lithium-ion secondary batteries

### (1) Analysis method of sample

### (1-1) Particle structure

The particle structure of the secondary particles of the positive electrode active material can be determined by a scanning electron microscope (SEM).

For observation of the particles, moreover, a cross-section sample of particles obtained by processing the positive electrode active material by IB-19530CP (manufactured by JEOL Ltd.), which is cross-section polisher (CP), can also be used. Then, the cross-section can be observed by JSM-7001F (manufactured by JEOL Ltd.), which is a Schottky field emission scanning electron microscope (SEM).

### (1-2) Composition

The composition of the positive electrode active material can be evaluated by acid decomposition-inductively coupled plasma (ICP) emission spectrometry.

For the spectrometry, ICPE-9000 (manufactured by Shimadzu Corporation), which is a multitype ICP emission spectrometer, can be used.

The value of the ratio (Li/Me) of the number of lithium atoms (Li) included in the positive electrode active material to the total number of nickel atoms and iron atoms (Me) included in the positive electrode active material can also be determined from the obtained result.

### (1-3) Excess lithium content

The excess lithium content can be measured by neutralization titration (sequential titration by the R. B. Warder's method). The excess lithium refers to lithium derived from lithium hydroxide and lithium derived from lithium carbonate.

Lithium hydroxide and lithium carbonate as excess lithium are present on the surfaces of the particles of the positive electrode active material that is the collected sample. The lithium hydroxide and the lithium carbonate are dissolved in water and are ionized and released from the lithium-ions (Li⁺) in the form of hydroxide ions (OH⁻) and carbonate ions (CO₃²⁻), respectively. Therefore, by titrating these separated anions with an inorganic acid or the like, a total amount of lithium derived from lithium hydroxide and lithium derived from lithium carbonate can be determined. Alternatively, the amount of the lithium derived from lithium hydroxide and the amount of the lithium derived from lithium carbonate may be determined separately.

In the above titration, the first end point (pH: approximately 8.3) is indicated by the pH change occurred when the entire amount of lithium hydroxide and half of the amount of lithium carbonate are reacted, and the second end point (pH: approximately 3.8) is indicated by the pH change occurred when the remaining half of the lithium carbonate is reacted.

In addition, COM-1750 (manufactured by HIRANUMA Co., Ltd.), which is an automatic titrator, is used in the analysis, and the determination of the end point (potential difference) can be performed with a pH composite electrode.

For the determination of the excess lithium content, first, the sampled positive electrode active material is added to water to obtain a solution, and the obtained solution is subjected to the above-described titration to calculate a sum of an amount of lithium derived from lithium hydroxide and an amount of lithium derived from lithium carbonate. Subsequently, a ratio of the calculated sum of the lithium amounts based on mass to a mass of the sampled positive electrode active material is determined, and the resultant ratio is determined as an excess lithium content.

### (1-4) Lattice constants (a-axis and c-axis) and full width at half maximum of peak of (003) plane

The lattice constants (a-axis and c-axis) and the full width at half maximum of the peak of (003) plane can be evaluated by X-ray diffraction (XRD).

For the measurement of the X-ray diffraction pattern, X'PertPRO (manufactured by Spectris Co., Ltd.), which is an X-ray diffractometer (XRD), is used, and CuKα rays can be used as a radiation source. Then, the lattice constant can be determined by performing Rietveld analysis on the measured X-ray diffraction pattern using a generally widely used analysis program, such as RIETAN-FP, JADE PRO (produced by Materials Data, Inc.), or the like. In Examples and Comparative Examples below, JADE PRO was used. In addition, the full width at half maximum of the peak of (003) plane can be determined from the measured X-ray diffraction pattern.

### (1-5) D50 particle diameter

The D50 particle size of the particles of the positive electrode active material can be determined by determining D50 particle size from a volume-based particle size distribution measured by a laser diffraction-scattering method.

For the measurement of the particle size distribution, Microtrac MT3300EXII (manufactured by MicrotracBEL Corp.), which is a laser diffraction/scattering particle size distribution analyzer, can be used. Then, the volume-based cumulative particle diameter at 50% determined from the obtained volume-based particle size distribution is determined as a D50 particle size.

### (2) Measuring method of battery

### (2-1) Production of evaluation battery (coin cell battery CBA)

An evaluation battery illustrated in Fig. 1 can be produced by the following procedures.

The positive electrode active material in the amount of 52.5 mg, acetylene black in the amount of 15 mg, and polytetrafluoroethylene in the amount of 7.5 mg are each weighed and mixed together, and the resultant mixture is press-molded at the pressure of 100 MPa to form a molded product having a diameter of 11 mm and a thickness of 100 µm. Subsequently, the molded product is dried in a vacuum dryer at 120°C for 12 hours, thereby producing a positive electrode PE.

A 2032 coin cell battery CBA is produced using the produced positive electrode PE in a glove box of an argon gas atmosphere in which a dew point is controlled at -80°C. A lithium metal having a diameter of 17 mm and a thickness of 1 mm is used as a negative electrode NE. As an electrolytic solution, a mixed solution (manufactured by TOMIYAMA PURE CHEMICAL INDUSTRIES, LTD.) of equal amounts of ethylene carbonate (EC) and diethyl carbonate (DEC) including 1 mole of LiClO₄ as a supporting electrolyte (supporting salt) is used. As a separator SE, a porous polyethylene membrane having a membrane thickness of 25 µm is used.

As illustrated in Fig. 1, an electrode body in which the positive electrode PE, the separator SE, and the negative electrode NE are sequentially stacked is produced, and the electrode body is impregnated with the electrolytic solution. Then, the electrode body is sealed in a case CA including a positive electrode can PC and a negative electrode can NC.

The positive electrode PE is disposed to be in contact with the positive electrode can PC. In addition, the negative electrode NE is disposed to be in contact with the negative electrode can NC via a wave washer WW.

The case CA is provided with a gasket GA. The gasket GA restricts the relative movement of the positive electrode can PC and the negative electrode can NC and fixes the positive electrode can PC and the negative electrode can NC to maintain a non-contact state, that is, an electrically insulated state between the positive electrode can PC and the negative electrode can NC. In addition, the gasket GA also has a function of sealing the gap between the positive electrode can PC and the negative electrode can NC to shield the inside of the case CA from the outside in an air-tight and liquid-tight manner.

### (2-2) Initial discharge capacity

The initial discharge capacity can be evaluated by the following method.

The evaluation battery (coin cell battery CBA) illustrated in Fig. 1 is left to stand for approximately 24 hours after the production of the evaluation battery. After the open circuit voltage (OCV) is stabilized, the evaluation battery is charged to a cut-off voltage of 4.3 V with the current density for the positive electrode being 0.1 mA/cm² to determine the initial charge capacity. Subsequently, after a 1-hour rest, a capacity of the evaluation battery that is determined by discharging the evaluation battery to a cut-off voltage of 2.5 V can be evaluated as an initial discharge capacity.

For the measurement, R6741A (manufactured by ADVANTEST CORPORATION), which is a multi-channel voltage/current generator, can be used.

### Examples

The present invention will be concretely described through Examples and Comparative Examples hereinafter. In Examples and Comparative Examples below, reagents and the like manufactured by FUJIFILM Wako Pure Chemical Corporation were used unless otherwise stated. Further, the present invention is not limited by Examples and Comparative Examples in any way.

### [Example 1]

### (1) Production of metal complex hydroxide (precursor)

### (Crystallization step)

First, 14 L of water was added to a 60 L reaction tank, the temperature inside the tank was set to 40°C while stirring, and a nitrogen gas was introduced into the tank, thereby controlling the gas phase in the tank to a non-oxidizing atmosphere having an oxygen concentration of 0.1% by volume. During the crystallization step, the temperature of the reaction solution was maintained at 40°C, and the atmosphere inside the reaction tank was also maintained to be the non-oxidizing atmosphere.

Next, an appropriate amount of an alkaline solution (25 percent by mass sodium hydroxide aqueous solution) and an appropriate amount of an ammonium ion source (25 percent by mass ammonia water) were added to the water in the tank, thereby producing a reaction solution. In the production of the reaction solution, the reaction solution was produced so that pH (based on pH at the liquid temperature of 25°C, the same applies hereinafter) was to be 12.8 and the ammonium ion concentration was to be 10 g/L.

Separately, nickel sulfate hexahydrate and iron(II) surface heptahydrate were weighed so that atomic % of nickel and iron was to be Ni:Fe = 95:5, and were mixed with water and sulfuric acid so that a total concentration of nickel and iron was to be 2 mol/L, thereby producing a raw material solution.

Then, the raw material solution was added to the reaction solution in the tank at the feeding rate of 100 mL/min. At the same time, the alkaline solution and the ammonium ion source were also added to the reaction solution at the constant rate. While maintaining pH of the reaction solution at 12.8 (nucleation step pH) and the ammonium ion concentration of the reaction solution at 10 g/L, crystallization was allowed to carry out for 1 minute, thereby performing nucleation (nucleation step).

After temporarily stopping the supply of the raw material solution, the alkaline solution, and the ammonium ion source, sulfuric acid was added until pH of the reaction solution reached 11.6 (particle growth step pH). Once the pH of the reaction solution reached 11.6, the supply of the raw material solution, the alkaline solution, and the ammonium ion source was restarted. While maintaining the pH of the reaction solution at 11.6 and the ammonium ion concentration of the reaction solution at 10 g/L, crystallization was continued for 4 hours, thereby allowing the particles to grow (particle growth step). By performing the particle growth step, a slurry including Ni_{0.95}Fe_{0.05}(OH)₂, which was a nickel iron complex hydroxide (metal complex hydroxide) having a solid structure, was obtained.

A filter press was loaded with obtained slurry including the metal complex hydroxide (before washing), and pressure filtration was performed, thereby recovering a metal complex hydroxide cake.

### (Washing step)

The metal complex hydroxide cake obtained in the crystallization step was returned to the reaction tank, and the tank was filled with an alkaline washing solution (5 percent by mass sodium hydroxide aqueous solution) and stirred for 30 minutes to perform alkali washing, followed by performing pressure filtration again with the filter press, thereby recovering an alkali-washed cake.

Subsequently, the alkali-washed cake was returned to the reaction tank, and the tank was filled with water, and stirred for 30 minutes to perform water washing. Then, again, pressure filtration was performed with a filter press, thereby recovering a water-washed cake (washed cake).

### (Drying step)

The water-washed cake recovered in the washing step was dried at 150°C for 5 hours by an electrically heated dryer, thereby obtaining a metal complex hydroxide (precursor).

### (2) Production of lithium metal complex oxide (positive electrode active material)

### (Mixing step)

The obtained metal complex hydroxide (precursor) and lithium hydroxide as a lithium compound were weighed and sufficiently mixed, thereby obtaining a lithium mixture. During the mixing, the raw materials were mixed so that "the value of the ratio (Li/Me)", which was a ratio of the number of lithium atoms (Li) to the number of nickel atoms and iron atoms (Me) included in a target positive electrode active material, was to be 1.03.

### (Firing step)

The lithium mixture was heated at 450°C for 2 hours under a stream of oxygen gas (oxygen concentration: 100% by volume) in an electric furnace to perform calcination, followed by heating at 720°C for 5 hours under a stream of oxygen gas (oxygen concentration: 100% by volume) to perform firing. After the firing step, a positive electrode active material including a lithium nickel iron complex oxide having a solid structure was obtained. The composition of the positive electrode active material was Li_{1.02}Ni_{0.95}Fe_{0.05}O₂.

The obtained positive electrode active material was evaluated for the particle structure, the excess lithium content, the lattice constants (a-axis and c-axis), the full width at half maximum of the peak of (003) plane, and the D50 particle size. In addition, a coin cell battery CBA illustrated in Fig. 1 was produced using the obtained positive electrode active material, and the evaluation of the initial discharge capacity was performed. The evaluation results are presented in Table 1. In Table 1, the excess lithium content is presented in the column of "Excess Li", and the full width at half maximum of the peak of (003) plane is presented in the column of "FWHM of (003) plane peak".

Since the conditions for the evaluations are the same as the methods described in "2. Evaluation methods for positive electrode active material for lithium-ion secondary batteries", the description will be omitted.

The result of the evaluation of the particle structure of the positive electrode active material confirmed that the obtained positive electrode active material included secondary particles each formed of aggregated primary particles. In addition, the X-ray diffraction pattern of the obtained positive electrode active material confirmed that the positive electrode active material included the lithium metal complex oxide, and the lithium metal complex oxide had the α-NaFeO₂ crystal structure (hexagonal layered rock salt crystal structure, space group R-3m). It was confirmed that the evaluation results of the particle structure and the crystal structure of the lithium metal complex oxide were the same in other Examples below.

### [Example 2]

In the production of a lithium metal complex oxide, in addition to the metal complex hydroxide and the lithium hydroxide, titanium(IV) oxide, which was a titanium compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.02. In addition, during the mixing, the raw materials were weighed and mixed so that the composition ratio (at%) between nickel, iron, and titanium was to be 95:5:0.25, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Ti_{0.0025}O₂. The evaluation results are presented in Table 1.

### [Example 3]

In the production of a lithium metal complex oxide, in addition to the metal complex hydroxide and the lithium hydroxide, titanium(IV) oxide, which was a titanium compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.03. In addition, during the mixing, the raw materials were weighed and mixed so that the composition ratio (at%) between nickel, iron, and titanium was to be 95:5:0.5, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Ti_{0.005}O₂. The evaluation results are presented in Table 1.

### [Example 4]

In the production of a lithium metal complex oxide, in addition to the metal complex hydroxide and the lithium hydroxide, titanium(IV) oxide, which was a titanium compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.03. In addition, during the mixing, the raw materials were weighed and mixed so that the composition ratio (at%) between nickel, iron, and titanium was to be 95:5:1, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Ti_{0.01}O₂. The evaluation results are presented in Table 1.

### [Example 5]

In the production of a lithium metal complex oxide, in addition to the metal complex hydroxide and the lithium hydroxide, tin(IV) oxide, which was a tin compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.03. In addition, during the mixing, the raw materials were weighed and mixed so that the composition ratio (at%) between nickel, iron, and tin was to be 95:5:0.25, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Sn_{0.0025}O₂. The evaluation results are presented in Table 1.

### [Example 6]

In the production of a lithium metal complex oxide, in addition to the metal complex hydroxide and the lithium hydroxide, tin(IV) oxide, which was a tin compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.03. In addition, during the mixing, the raw materials were weighed and mixed so that the composition ratio (at%) between nickel, iron, and tin was to be 95:5:0.5, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Sn_{0.005}O₂. The evaluation results are presented in Table 1.

### [Example 7]

In the production of a lithium metal complex oxide, in addition to the metal complex hydroxide and the lithium hydroxide, tin(IV) oxide, which was a tin compound, was added as a compound for supplying M and mixed in the mixing step. In the mixing step, the raw materials were weighed and mixed so that "the value of the ratio (Li/Me)", which was a ratio of the number of lithium atoms (Li) to the number of nickel atoms and iron atoms (Me) included in a target positive electrode active material was to be 1.03. In addition, during the mixing, the raw materials were weighed and mixed so that the composition ratio (at%) between nickel, iron, and tin was to be 95:5:1, thereby obtaining a lithium mixture.

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}Sn_{0.01}O₂. The evaluation results are presented in Table 1.

### [Example 8]

The metal complex hydroxide was heated at 450°C for 2 hours under a stream of air (oxygen concentration: 21% by volume) in an electric furnace to perform calcination. Subsequently, oxidative roasting was performed by heating at 600°C for 5 hours under a stream of air (oxygen concentration: 21% by volume), thereby obtaining Ni_{0.95}Fe_{0.05}O, which was nickel iron complex oxide (metal complex oxide) having a solid structure (oxidative roasting step).

In the mixing step, the metal complex oxide (intermediate product) obtained in the oxidative roasting step was used instead of the metal complex hydroxide (precursor).

A positive electrode active material was produced in the same manner as in Example 1, except for the procedure described above, and lastly, the positive electrode active material including a lithium nickel iron complex oxide having a solid structure was obtained. The composition of the positive electrode active material was Li_{1.02}Ni_{0.95}Fe_{0.05}O₂. The evaluation results are presented in Table 1.

### [Comparative Examples 1 to 4]

A positive electrode active material including a lithium nickel manganese cobalt complex oxide produced according to the technique of the related art was used. As the lithium nickel manganese cobalt complex oxide, NMC111 was used in Comparative Example 1, NMC532 was used in Comparative Example 2, NMC622 was used in Comparative Example 3, and NMC811 was used in Comparative Example 4.

The evaluation results of the positive electrode active materials including NMC used in Comparative Examples 1 to 4 are as presented in Table 1.

**[Table 1]**

| | Composition | Excess Li | Lattice constant (a-axis) | Lattice constant (c-axis) | FWHM of (003) plane peak | D50 particle size | Initial discharge capacity |
|---|---|---|---|---|---|---|---|
| | | [mass%] | [Å] | [Å] | [° ] | [*µ*m] | [mAh/g] |
| Ex. 1 | Li_{1.02}Ni_{0.95}Fe_{0.05}O₂ | 0.17 | 2.8807 | 14.221 | 0.036 | 15 | 200 |
| Ex. 2 | Li_{1.02}Ni_{0.95}Fe_{0.05}Ti_{0.0025}O₂ | 0.18 | 2.8808 | 14.223 | 0.036 | 16 | 209 |
| Ex. 3 | Li_{1.02}Ni_{0.95}Fe_{0.05}Ti_{0.005}O₂ | 0.19 | 2.8809 | 14.226 | 0.043 | 16 | 206 |
| Ex. 4 | Li_{1.02}Ni_{0.95}Fe_{0.05}Ti_{0.01}O₂ | 0.23 | 2.8809 | 14.233 | 0.059 | 16 | 219 |
| Ex. 5 | Li_{1.02}Ni_{0.95}Fe_{0.05}Sn_{0.0025}O₂ | 0.20 | 2.8813 | 14.225 | 0.040 | 16 | 212 |
| Ex. 6 | Li_{1.02}Ni_{0.95}Fe_{0.05}Sn_{0.005}O₂ | 0.25 | 2.8818 | 14.229 | 0.048 | 16 | 218 |
| Ex. 7 | Li_{1.02}Ni_{0.95}Fe_{0.05}Sn_{0.01}O₂ | 0.28 | 2.8827 | 14.238 | 0.062 | 15 | 220 |
| Ex. 8 | Li_{1.02}Ni_{0.95}Fe_{0.05}O₂ | 0.16 | 2.8805 | 14.221 | 0.037 | 15 | 203 |
| Comp. Ex. 1 | Li_{1.05}Ni_{0.34}Mn_{0.33}Co_{0.33}O₂ | 0.062 | 2.864 | 14.25 | 0.056 | 12 | 160 |
| Comp. Ex. 2 | Li_{1.02}Ni_{0.5}Mn_{0.3}Co_{0.2}O₂ | 0.081 | 2.8064 | 14.244 | 0.080 | 12 | 166 |
| Comp. Ex. 3 | Li_{1.03}Ni_{0.6}Mn_{0.2}Co_{0.2}O₂ | 0.085 | 2.8678 | 14.216 | 0.043 | 13 | 171 |
| Comp. Ex. 4 | Li_{1.02}Ni_{0.8}Mn_{0.1}Co_{0.1}O₂ | 0.086 | 2.873 | 14.204 | 0.046 | 12 | 179 |

### [Overall evaluation]

When the positive electrode active materials of Examples 1 to 8 were used in lithium-ion secondary batteries, respectively, an effect of improving an initial discharge capacity was confirmed as compared with the positive electrode active materials of Comparative Examples 1 to 4.

Specifically, according to the positive electrode active material of one aspect of the present disclosure, it was confirmed that, when used in a lithium-ion secondary battery, a comparable or greater discharge capacity as the discharge capacities of NMC111, NMC532, NMC622, and NMC811, which were the positive electrode active materials that had been widely used, was achieved.

In addition, according to the positive electrode active material of one aspect of the present disclosure, the cobalt content and costs could be reduced compared with NMC111 or the like, which was the positive electrode active material that had been widely used.

As described above, according to the positive electrode active material of one aspect of the present disclosure, a proportion of cobalt that was a factor for cost increase was reduced, and resource-rich and inexpensive iron was used instead of the cobalt under the conditions that inhibited the crystal structure change. As a result, it was confirmed that battery characteristics could also be improved.

As described above, by using resource-rich and inexpensive iron, a problem associated with the positive electrode active material could be significantly improved compared with the technology of the related art described as Comparative Examples.

The technical scope of the present invention is not limited to the embodiments described in the above aspect. One or more of the features described in the above aspect or the like may be omitted. The features described in the above aspect or the like may be appropriately combined. In addition, as long as permitted by law, the contents of all documents cited in the present specification are incorporated herein by reference.

This application claims priority under Japanese Patent Application No. 2023-115020 filed July 13, 2023, the entire contents of Japanese Patent Application No. 2023-115020 are incorporated herein by reference.

### REFERENCE SIGNS LIST

CBA: coin cell battery (evaluation battery, lithium-ion secondary battery)
CA: case
PC: positive electrode can
NC: negative electrode can
GA: gasket
PE: positive electrode
SE: separator
NE: negative electrode
WW: wave washer

## Claims

1. A positive electrode active material for lithium-ion secondary batteries, the positive electrode active material comprising:
a lithium metal complex oxide having an α-NaFeO₂ crystal structure,
wherein the positive electrode active material includes secondary particles, each secondary particle including primary particles aggregated to one another,
the positive electrode active material is represented by a general formula: LiₐNi₁₋ₓFeₓM_{y}O_{2+α} (a, x, y, and α are numbers satisfying 0.95 ≤ a ≤ 1.5, 0.01 ≤ x ≤ 0.2, 0 ≤ y < 0.1, and -0.1 ≤ α ≤ 0.2, respectively, and M includes at least one element selected from the group consisting of W, Mo, V, Ti, Sn, Mn, Nb, Zr, Ta, B, and Si), and
an excess lithium content of the positive electrode active material is 0.1 percent by mass or greater and 1 percent by mass or less.

2. The positive electrode active material for lithium-ion secondary batteries according to claim 1,
wherein the lithium metal complex oxide has an a-axis lattice constant of 2.87 Å or greater.

3. The positive electrode active material for lithium-ion secondary batteries according to claim 1 or 2,
wherein the lithium metal complex oxide has a c-axis lattice constant of 14.2 Å or greater.

4. The positive electrode active material for lithium-ion secondary batteries according to claim 1 or 2,
wherein a full width at half maximum of a peak of (003) plane in an X-ray diffraction pattern of the lithium metal oxide is 0.1° or less.
